# Europäisches Patentamt
# European Patent Office
# Office européen des brevets

(19)

(11) Veröffentlichungsnummer: **0 223 105**
**B1**

(12) **EUROPÄISCHE PATENTSCHRIFT**

(45) Veröffentlichungstag der Patentschrift:
14.03.90

(51) Int. Cl.⁴: **C09D 5/34, C09D 7/12**

(21) Anmeldenummer: 86114834.4

(22) Anmeldetag: 24.10.86

(54) Spachtelmassen, Putze, Fassadenfarben, Innenfarben und Lasuren enthaltend eine wässrige Distearyldiketen-Emulsion als Hydrophobierungsmittel.

(30) Priorität: 12.11.85 DE 3540042

(43) Veröffentlichungstag der Anmeldung:
27.05.87 Patentblatt 87/22

(45) Bekanntmachung des Hinweises auf die Patenterteilung:
14.03.90 Patentblatt 90/11

(84) Benannte Vertragsstaaten:
AT BE CH DE FR GB IT LI NL SE

(56) Entgegenhaltungen:
DE-A- 1 646 657

CHEMICAL ABSTRACTS, Band 83, Nr. 20, 17. November 1975, Seite 117, Zusammenfassung Nr. 166098b, Columbus, Ohio, US; & JP-A-75 53 608 (NIPPON OILS AND FATS CO., LTD) 12-05-1975

(73) Patentinhaber: BASF Aktiengesellschaft,
Carl-Bosch-Strasse 38, D-6700 Ludwigshafen(DE)

(72) Erfinder: Ley, Gregor, Dr., In den Trankstücken,
D-6719 Wattenheim(DE)
Erfinder: Melan, Michael, Dr., Hans-Willmann-Strasse 4,
D-6706 Wachemheim(DE)
Erfinder: Wistuba, Eckehardt, Dr., Im Obergarten 7,
D-6702 Bad Dürkheim(DE)

## Beschreibung

Die vorliegende Erfindung betrifft die Hydrophobierung von Anstrichstoffen auf Dispersionsbasis, kunstharzgebundenen Putzen sowie zementhaltigen und zementfreien Spachtelmassen mit wäßrigen Distearyldiketen-Emulsionen.

Bei der Herstellung von Anstrichstoffen, kunstharzgebundenen Putzen sowie von zementhaltigen und zementfreien Spachtelmassen werden häufig Hydrophobierungsmittel zugesetzt. Hierfür werden Silikone, Ethylenwachsdispersionen und Metallseifen, z.B. Zinkstearat, verwendet. Der Einsatz von Silikonen führt jedoch häufig wegen Unverträglichkeiten zu Oberflächenstörungen, wie Fischaugen. Auch ist die Überstreichbarkeit nicht gewährleistet, da die Silikone an die Oberfläche wandern und somit die Haftung vermindern. Ethylenwachsdispersionen zeigen im allgemeinen keine Verlaufsstörungen der Filme, setzen jedoch in niedrig pigmentierten Farben den Glanz herab und wirken so häufig als Mattierungsmittel. Auch läßt ihre hydrophobierende Wirkung zu wünschen übrig, da sie große Mengen an Emulgatoren enthalten, die häufig im Bereich von 4 bis 15 Gew.%, bezogen auf die Wachsmenge, liegen.

Metallseifen. z.B. Zinkstearat, lassen sich nur schwer in wäßrigen Anstrichstoffen homogen verteilen. Außerdem wirken auch sie mattierend. Ionenempfindliche Dispersionen können zudem durch Metallseifen koaguliert werden.

Auch Distearyldiketen läßt sich wegen seiner Konsistenz in wäßrige Anstrichstoffe und Putze nur schwer einarbeiten.

Es wurde nun gefunden, daß Spachtelmassen, Putze, Fassadenfarben, Innenfarben und Lasuren, die als Hydrophobierungsmittel 0,5 bis 10 % ihres Gewichts einer Distearyldiketen-Emulsion, die 3 bis 40 Gewichtsteile Distearyldiketen, 10 bis 70 Gewichtsteile Lösemittel, 5 bis 50 Gewichtsteile Wasser und 0.5 bis 5 Gewichtsteile Emulgator enthalten, besonders vorteilhafte Eigenschaften haben .

Die Distearyldiketen-Emulsionen sind über 1/2 Jahr lagerstabil, lassen sich sehr gut in wäßrige, Polymer-Dispersionen enthaltende Anstrichstoffe, Putze, Spachtelmassen und Lasuren einarbeiten, sind gut verträglich, wirken nicht mattierend und verleihen diesen Systemen eine gute Wasserabstoßung. Auch wird die Überstreichbarkeit nicht beeinträchtigt, d.h. es ergeben sich keine Haftungsprobleme. Besonders wirkungsvoll ist der Einsatz der erfindungsgemäßen Distearyldiketen-Emulsionen in kunstharzgebundenen Putzen, die erheblich weniger verschmutzen und z.B. innerhalb von 2 Jahren nicht von Algen, Pilzen und Moosen befallen werden.

Holzlasuren auf Polymer-Dispersions-Basis können mit den erfindungsgemäßen Distearyldiketen-Emulsionen ebenfalls hydrophobiert werden. Die hydrophobierten Lasuren wirken sich positiv auf den Feuchtigkeitshaushalt des damit lasierten Holzes aus, so daß dieses nicht oder nur wenig von holzzerstörenden Pilzen angegriffen wird.

Erfindungsgemäß mit Distearyldiketen-Emulsionen versetzte Innenfarben zeigen aufgrund der erhöhten Wasserfestigkeit ein verbessertes Naßscheuerverhalten.

Die wasserabweisende Wirkung der Distearyldiketen-Emulsionen wirkt sich in zementhaltigen und zementfreien Spachtelmassen positiv auf das in Wärmedämmsystemen eingesetzte Glasseidengittergewebe (Armierungsgewebe) aus, da aufgrund der verringerten Hydrolyse dieser Gewebe deren Reißfestigkeit nicht vermindert wird. Weiterhin verhindern die Distearyldiketen-Emulsionen bei längeren Regenperioden eine Durchfeuchtung der Spachtelmassen und Putze.

Die Herstellung der an sich, z.B. aus der DE-A-25 14 128 bekannten Distearyldiketen-Emulsionen kann vorteilhaft in Zwangsmischern, z.B. Ultraturrax-Mischern, in denen das Wasser mit dem Emulgator vorgelegt wird, erfolgen. Anschließend können 1 bis 5 % des Lösemittels unter starkem Rühren eingetragen werden. In diese Voremulsion kann das Distearyldiketen gelöst in Lösemittel - der Gehalt an Distearyldiketen dieser Lösung beträgt meist 5 bis 40 Gew.% - unter Rühren eingetragen werden.

Als Lösemittel können Ester, z.B. Gemische der Di-n-butylester der Adipin-, Glutar- und Bernsteinsäure, 2,2,4-Trimethylpentan-1,3-diol-1-isobutyrat, und Ester der $C_2$ bis $C_8$ Carbonsäuren mit $C_4$ bis $C_{25}$ Alkanolen, Kohlenwasserstoffe, z.B. Xylol, Toluol, Benzine, deren Siedepunkte zwischen 90 und 260°C liegen, und Terpene sowie natürliche Öle, wie Pineöl, Tallöl und Leinöl eingesetzt werden. Weiterhin eignen sich oligomere Polymerisationsprodukte, z.B. Oligostyrol, Oligoisobutylen und Kondensationsprodukte, d.h. Ester aus Diolen und Dicarbonsäuren.

Als Emulgator können z.B. Alkylsulfate, Alkysulfonate und Alkylethersulfate verwendet werden, deren Alkylgruppen meist 8 bis 25 C-Atome aufweisen. Auch Ethoxilierungsprodukte von $C_8$-$C_{12}$-Alkylphenolen, Fettalkoholen, Fettsäuren und Fettsäureamiden mit Ethoxilierungsgraden von meist 5 bis 50, bevorzugt 10 bis 30, sind gut geeignet. Ebenfalls können die sulfatierten Produkte obiger Verbindungen eingesetzt werden.

Die Distearyldiketen-Emulsion wird in Mengen von 0,5 bis 10 Gew.%, bevorzugt 0,75 bis 4 Gew.%, bezogen auf die Beschichtungssysteme, in die zu hydrophobierenden Beschichtungssysteme wie Putze, Dispersionsfarben, Lasuren und Spachtelmassen im allgemeinen unter Einrühren zugefügt bzw. eingearbeitet.

Die in den folgenden Beispielen angegebenen Teile und Prozente beziehen sich auf das Gewicht.

Beispiel 1

Herstellung der Distearyldiketen-Emulsion

In 25 Teilen Wasser wird 1 Teil sulfatiertes, ethoxiliertes p-n-Nonylphenol (Ethoxilierungsgrad 25) gegeben. In die Emulgatorlösung werden unter starkem Rühren 3 Teile Testbenzin (Siedebereich 180 bis 210°C) eingerührt. Anschließend werden 71 Teile einer 20%igen Distearyldiketen-Lösung in dem Testbenzin innerhalb von 15 Minuten unter starkem Rühren zugegeben.
Die Viskosität der erhaltenen Emulsion beträgt 2000 mPa.s.
Erfindungsgemäßer kunstharzgebundener Putz mit Distearyldiketen-Emulsion
In den Putz des Vergleichsbeispiels a werden 17,9 Teile Distearyldiketen-Emulsion eingearbeitet.
Ergebnis siehe Tabelle 1.

Vergleichsbeispiel a (Kunstharzgebundener Putz ohne Hydrophobierungsmittel)

```
50 % wäßrige Dispersion eines Copolymerisats
aus gleichen Teilen n-Butylacrylat und Styrol             128,0 Teile
Tetrakaliumpyrophosphat (50%ige wäßrige Lösung)             4,6 Teile
Testbenzin (Siedebereich 180 bis 210°C)                   60,0 Teile
Hydroxiethylcellulose (3%ige wäßrige Lösung)              21,0 Teile
Titanweiß                                                 32,0 Teile


Calciumcarbonat (mittlerer Teilchendurchmesser
                10 bis 200 μm)                            419,0 Teile
Aluminiumsilikat                                           89,5 Teile
Calciumcarbonat (mittlerer Teilchendurchmesser
                1,2 bis 1,8 mm)                           230,0 Teile
Handelsüblicher Entschäumer auf Silikonbasis               3,8 Teile
Wasser                                                     6,9 Teile
```

Ergebnis siehe Tabelle 1.

Vergleichsbeispiel b (Kunstharzgebundene Putze mit Ethylenwachs-Dispersion)

In den Putz von Vergleichsbeispiel a wurden 5 Teil einer 60%igen wäßrigen Ethylenwachs-Dispersion eingearbeitet.
Ergebnis siehe Tabelle 1.

Tabelle 1

Prüfergebnisse der hydrophobierten und der nicht hydrophobierten Putze

|  | Vergleichsbeispiele | | Beispiel |
|---|---|---|---|
|  | a | b | 1 |
| a) Wasseraufnahme nach 24 Stunden Wasserlagerung der 1 Woche bei Raumtemperatur getrockneten Putze | 12 % | 9,5 % | 5,5 % |
| b) Verschmutzung nach 2 Jahren Freibewitterung | stark verschmutzt | stark verschmutzt | sehr wenig verschmutzt |
| c) Hydrophobierende Wirkung nach 2 Jahren Freibewitterung Zeit des Verschlagens von 1 ml Wasser | sofort | nach 10 Minuten | nach 30 Minuten |

Vergleichbeispiel c (Zementhaltiger Spachtelputz ohne Hydophobierungsmittel)

| | |
|---|---|
| Hydroxiethylcellulose (Tylose MHB 30 000) (2%ige wäßrige Lösung) | 125 Teile |
| 20%ige wäßrige Natriumhydroxidlösung | 1 Teil |
| Handelsübliches Konservierungsmittel | 3 Teile |
| Handelsüblicher Entschäumer auf Mineralölbasis | 1 Teil |
| Polyacrylnitrilfaser (Länge 2 bis 4 mm) | 5 Teile |
| Wasser | 35 Teile |
| Calciumcarbonat (Durchmesser 10 bis 43 μm) | 50 Teile |
| Calciumcarbonat (Durchmesser 40 bis 200 μm) | 230 Teile |
| 50%ige wäßrige Dispersion eines Copolymerisats aus Styrol und Butylacrylat (1:1) | 150 Teile |
| Quarzsand (Durchmesser ca. 0,3 mm) | 400 Teile |
| | 1000 Teile |

In die Spachtelmasse wurden 300 Teile Zement PZ 35 F eingearbeitet.
Ergebnis siehe Tabelle 2.

Beispiel 2

Zementhaltiger Spachtelputz mit Distearyldiketen-Emulsion

In die zementhaltige Spachtelmasse aus Vergleichsbeispiel c wurden 2 % Distearyldiketen-Emulsion (fest/fest, bezogen auf den Spachtelputz) aus Beispiel 1 eingearbeitet.

4

Ergebnis siehe Tabelle 2.

## Tabelle 2

Prüfergebnisse der zementhaltigen Spachtelmassen

| | Vergleichsbeispiel c | Beispiel 2 |
|---|---|---|
| a) Hydrophobierende Wirkung ge- messen in Min., die 1 ml Wasser zum Wegschlagen benötigen nach 24stündiger Trocknung der Spachtelmasse bei Raumtemperatur | 4 Min. | 45 Min. |
| b) Abbindevermögen | gut | gut |

Vergleichsbeispiel d (Innenfarbe ohne Hydrophobierungsmittel)

| | |
|---|---|
| Wasser | 68 Teile |
| Ammoniumpolyacrylat (25%ige wäßrige Lösung) | 3 Teile |
| Natriumphosphat (25%ige wäßrige Lösung) | 3 Teile |
| Ammoniak (konzentrierte wäßrige Lösung) | 1 Teil |
| Handelsüblicher Entschäumer auf Silikonbasis | 2 Teile |
| Testbenzin (Siedebereich 180 bis 210°C) | 20 Teile |
| Propylenglykol | 10 Teile |
| Hydroxiethylcellulose (2%ige wäßrige Lösung) | 250 Teile |
| Titanweiß | 60 Teile |
| Aluminiumsilikat | 10 Teile |
| Calciumcarbonat (Durchmesser 10 bis 80 µm) | 480 Teile |
| Handelsüblicher Entschäumer auf Silikonbasis | 2 Teile |
| 55%ige wäßrige Dispersion eines Copolymerisats aus 60 Teilen Vinylpropionat und 40 Teilen tert.-Butylacrylat | 88 Teile |

Ergebnis siehe Tabelle 3.

Beispiel 3 (Innenfarbe mit Distearyldiketen-Emulsion)

In die Innenfarbe aus Vergleichsbeispiel d wurden 18 Teile Distearyldiketen-Emulsion aus Beispiel 1 eingearbeitet.
Ergebnis siehe Tabelle 3.

Tabelle 3

Prüfergebnisse der Innenfarben

|  | Vergleichsbeispiel d | Beispiel 3 |
|---|---|---|
| Naßscheuerbeständigkeit nach DIN 53 778 | 640 Scheuerzyklen | 950 Scheuerzyklen |

## Patentansprüche

1. Spachtelmassen, Putze, Fassadenfarben, Innenfarben und Lasuren, enthalten 0,5 bis 10 % ihres Gewichts an einer Distearyldiketen-Emulsion aus
   a) 3 bis 40 Gewichtsteilen Distearyldiketen
   b) 10 bis 70 Gewichtsteilen Lösemittel,
   c) 5 bis 50 Gewichtsteilen Wasser und
   d) 0,5 bis 5 Gewichtsteilen Emulgator
   als Hydrophobierungsmittel.
2. Verfahren zum Hydrophobieren von Spachtelmassen, Putzen, Fassadenfarben, Innenfarben und Lasuren, dadurch gekennzeichnet, daß man ihnen 0,5 bis 10 % ihres Gewichts an einer Distearyldiketen-Emulsion aus
   a) 3 bis 40 Gewichtsteilen Distearyldiketen,
   b) 10 bis 70 Gewichtsteilen Lösemittel,
   c) 5 bis 50 Gewichtsteilen Wasser und
   d) 0,5 bis 5 Gewichtsteilen Emulgator
   zufügt.

## Claims

1. A plaster, render, masonry paint, interior paint or glaze, containing from 0.5 to 10% by weight of a distearyldiketene emulsion consisting of
   a) from 3 to 40 parts by weight of distearyldiketene,
   b) from 10 to 70 parts by weight of a solvent,
   c) from 5 to 50 parts by weight of water and
   d) from 0.5 to 5 parts by weight of emulsifier, as a water repellent.
2. A process for rendering a plaster, render, masonry paint, interior paint or glaze water repellent, wherein from 0.5 to 10% by weight of a distearyldiketene emulsion consisting of
   a) from 3 to 40 parts by weight of distearyldiketene,
   b) from 10 to 70 parts by weight of a solvent,
   c) from 5 to 50 parts by weight of water and
   d) from 0.5 to 5 parts by weight of emulsifier are added to it.

## Revendications

1. Mastics, enduits, peintures de façade, peintures d'intérieur et glacis contenant comme agent hydrofugeant à raison de 0,5 à 10% de leur poids, d'une émulsion de distéaryldicétène composée de
   a) de 3 à 40 parties en poids de distéaryldicétène
   b) de 10 à 70 parties en poids de solvant
   c) de 5 à 50 parties en poids d'eau et
   d) de 0,5 à 5 parties en poids d'agent émulsifiant.
2. Procédé d'hydrofugation de mastics, d'enduits, de peintures de façade, de peintures d'intérieur et de glacis, caractérisé en ce qu'on leur ajoute de 0,5 à 10% de leur poids d'une émulsion de distéaryldicétène composée de
   a) de 3 à 40 parties en poids de distéaryldicétène
   b) de 10 à 70 parties en poids de solvant
   c) de 5 à 50 parties en poids d'eau et
   d) de 0,5 à 5 parties en poids d'agent émulsifiant.